Europäisches Patentamt

European Patent Office

Office européen des brevets

(11) Veröffentlichungsnummer: **0 005 812**
A1

(12) # EUROPÄISCHE PATENTANMELDUNG

(21) Anmeldenummer: **79101625.6**

(22) Anmeldetag: **28.05.79**

(51) Int. Cl.²: **E 04 B 1/80**
E 04 B 1/94, E 04 C 2/20
E 04 D 3/35, E 04 D 11/00

(30) Priorität: **06.06.78 DE 2824758**

(43) Veröffentlichungstag der Anmeldung:
**12.12.79 Patentblatt 79/25**

(84) Benannte Vertragsstaaten:
**AT BE CH DE FR LU NL SE**

(71) Anmelder: **VKI-Rheinhold & Mahla AG**
**Augusta-Anlage VKI-Haus**
**D-6800 Mannheim 1(DE)**

(72) Erfinder: **Diehl, Hermann, Dipl.-Ing.**
**Scharhofer Strasse 46**
**D-6800 Mannheim 31(DE)**

(74) Vertreter: **Müller, Heinz-Gerd, Dipl.-Ing. et al,**
**c/o Bayer AG Zentralbereich Patente Marken und**
**Lizenzen**
**D-5090 Leverkusen 1, Bayerwerk(DE)**

(54) **Bauplatte und ihre Verwendung zur Wärmedämmung.**

(57) Die wärmedämmende Bauplatte aus geschäumtem Kunststoff (1) ist beidseitig mit einer dünnen, schwer entflammbaren, wetterfesten und reflektierenden Kunststoff-Beschichtung (2, 3) gegen Temperaturbeanspruchung abgedeckt und mit selbstklebenden Streifen (6) versehen.

VKI-Rheinhold & Mahla AG, Augusta-Anlage, 6800 Mannheim 1

BEZEICHNUNG GEÄNDERT
siehe Titelseite

"Bauplatte"

Die Erfindung betrifft eine Bauplatte aus extrudiertem oder partikelgeschäumtem, dämmend beschichtetem Schaumkunststoff, insbesondere zum Schutz gegen die Temperaturbeanspruchung von Dächern.

Bauplatten dieser Art sind in den DE-GM 74 03 369 und 76 23 603 beschrieben. Die Dämm-Beschichtung mit Bitumen und Zusatzstoffen, insbesondere in Bitumen eingebundenen Schieferplättchen oder Kiespartikeln, bzw. aus Glasfaserbeton stellt eine hervorragende Isolierung der Dachkonstruktion gegen Temperaturschwankung aufgrund schwankender Wärmeeinstrahlung dar und erbringt zugleich eine wirksame Dämmung der Dachkonstruktion im Interesse der Energieersparnis beim Heizen der Räume unter dieser Dachkonstruktion, ohne die Gefahr heraufzubeschwören, daß die Dachkonstruktion durch eine Kiesschüttung, wie sie bei Stahlbeton-Flachdächern häufig angewandt wird, übermäßig beansprucht werden könnte. Insbesondere ist die Verlegung solcher Bauplatten auf Dachkonstruktionen auch einfacher, als das Aufbringen einer ge-

RM 384

eignet dimensionierten Kiesschüttung, so daß die Bauplatten sich in hervorragender Weise zum Einsatz bei der Altbausanierung eignen, zumal bei leichten Dächern.

Der Erfindung liegt die Aufgabe zugrunde, Bauplatten der genannten Art unter zumindest Beibehaltung ihrer funktionellen und anwendungsorientierten Vorzüge dahingehend weiterzubilden, daß aus ihnen der Aufbau hoch beanspruchbarer und zugleich verstärkt dämmender bzw. gegen Sonnenenergie-Einstrahlung isolierender Abdeckungen ermöglicht wird.

Diese Aufgabe wird erfindungsgemäß im wesentlichen dadurch gelöst, daß die Bauplatte gattungsgemäßer Art eine in Verhältnis zur Stärke des Schaumkunststoff-Kernkörpers dünne, schwer entflammbar, wetterfest und reflektierend eingestellte Kunststoff-Beschichtung aufweist, wie Ergänzung A1.

Diese erfindungsgemäß ausgestaltete Bauplatte behält ihre wärmedämmende Wirkung, nämlich zum Reduzieren von Wärmeabstrahlungsverlusten aus geheizten Räumen z. B. unter einer Dachkonstruktion, bei. Sie weist darüber hinaus jedoch einen verstärkten Schutz gegen thermische Wechselbeanspruchung der Dachkonstruktion aufgrund tageszeitlich und jahreszeitlich schwankender UV-Einstrahlung auf, weil die reflektierend eingestellte Beschichtung die Dachkonstruktion gegen die Sonneneinstrahlung wirksam isoliert. Die Beschichtung ist ohne weiteres so einstellbar, daß sie nicht nur reflektiert, auch gegen Flugfeuer und strahlende Wärme fest ist,

RM 384

sondern auch schwer entflammbar und wetterfest ist, so daß sich nach Aufbringen dieser Bauplatten auf Dach-Unterkonstruktionen oder auf Fassaden weitere Abdeckungs-Maßnahmen erübrigen.

Besonders zweckmäßig ist es, eine Kunststoff-Beschichtung der genannten Art auf PUR-Basis mit Reflexlack vorzusehen. Das ergibt eine besonders hochreflektierende Oberfläche, und zugleich ist dadurch eine mechanisch sehr beanspruchbare Beschichtung geschaffen, so daß selbst ein Begehen der beispielsweise auf einer Flachdach-Konstruktion ausgelegten erfindungsgemäßen Bauplatten keine mechanischen Zerstörungen zu befürchten sind. Außerdem sind die Möglichkeiten des Aufbringens einer solchen Beschichtung sehr vielfältig. So kann eine derartige Beschichtung gleicherweise schon maschinell im Werk durch Aufspritzen, Aufrollen oder Aufspachteln aufgebracht werden, aber auch erst auf der Baustelle durch manuelles Aufbringen auf den vorliegenden Schaumkunststoff-Kernkörper.

Die Filmdicke der Kunststoff-Beschichtung wird zweckmäßigerweise unmittelbar so stark gewählt, daß Flugfeuertests nach DIN 4102 ohne weiteres bestanden werden, die lokale Wärmebeanspruchung also nicht zur örtlichen Zerstörung der geschlossenen Außenfläche führen kann. Es hat sich gezeigt, daß ein Beschichten von Schaumkunststoff-Kernkörpern mit Dispersionsfarbe keine Oberfläche erzielen läßt, die die Anforderungen an die genormten Flugfeuertests erfüllt, während diesbezüglich bei der erfindungsgemäße Beschichtung keinerlei Einsatz-Beschränkungen für die Bauplatte hingenommen werden müssen.

RM 384

Gemäß einer zweckmäßigen Weiterbildung zur erfindungsgemäßen Lösung sind sämtliche Oberflächen der erfindungsgemäßen Bauplatte, also auch die Stirnseitenflächen, in der genannten Weise beschichtet. Die gleichförmige Beschichtung einerseits auf der vorderen und andererseits auf der rückwärtigen Oberfläche gewährleistet dabei, daß der Schaumstoff-Kernkörper sich auch unter einseitiger thermischer Beanspruchung nicht verwirft. Denn es hat sich gezeigt, daß die filmförmige Beschichtung überaus fest auf dem Kernkörper haftet, was höchstwahrscheinlich darauf zurückzuführen ist, daß das Lösungsmittel der lackförmigen Beschichtung die Oberfläche des Kernkörpers geringfügig anlöst und so zu einer besonders innigen Verbindung des Oberflächenbereiches des Kernkörpers mit der aufgebrachten Beschichtung führt. Die nach außen weisende Beschichtung ist zweckmäßigerweise etwas wellig aufgebracht, weil sich dadurch eine diffuse und somit besonders wirksame Reflexion der UV-Einstrahlung ergibt. Die Stirnflächen-Beschichtung stellt sicher, daß auch dann, wenn aufgrund thermischer oder mechanischer Beanspruchung zwischen nebeneinander verlegten Bauplatten der erfindungsgemäßen Ausgestaltung ein Spalt auftreten sollte, die hier eintretende UV-Strahlung nicht zur Zerstörung des UV-empfindlichen Kernkörpers führen kann.

Zweckmäßigerweise wird eine Beschichtung gewählt, in der Pigmente eingeschlossen sind. Dabei handelt es sich für Bauplatten, die als Dachabdeckung vorgesehen sind, vorzugsweise um Metallpigmente und bevorzugt um Aluminiumpigmente, um die Reflexionseigenschaften noch zu erhöhen. Bei Bauplatten,

RM 384

die als Fassadenverkleidung eingesetzt werden sollen, wird zweckmäßigerweise eine Beschichtung mit hellen, reflektierenden Farbpigmenten versehen, die der Außenfläche unmittelbar den gewünschten optischen Eindruck verleiht und somit das Aufbringen von Putz auf die Fassadenflächen erübrigt.

Problematisch bei der Anbringung der erfindungsgemäßen Bauplatten, sowohl auf Dach-Unterkonstruktionen als auch auf Fassadenflächen, können die temperaturbedingten Dehnungsauswirkungen und Feuchtigkeits-Einwirkungen sein. Denn die Bauplatten sollen auch bei feuchter Witterung aufgebracht werden können, und es muß damit gerechnet werden, daß sich zwischen den abdeckenden Bauplatten und der Abdichtung der Dach-Unterkonstruktion Feuchtigkeit ansammelt und bis zur Verdunstung aufgrund anderer Witterungsbedingungen stehenbleibt oder bei entsprechender Dachkonstruktion zur Traufe hin durchsickert. Dennoch sind die erfindungsgemäßen Bauplatten in ganz hervorragender Weise für derartige Verlegung geeignet. Denn sie lassen sich mittels eines Kunststoffklebers auf PUR-Basis, bevorzugt mittels eines Einkomponenten-PUR-Klebers, sicher und beständig befestigen. Dieser Kleber wird lokal, nämlich punktweise oder streifenförmig, auf die Rückseite der Bauplatten oder auf die Dach-Unterkonstruktion bzw. Dach-Abdichtung aufgespritzt oder batzenförmig aufgespachtelt; und es hat sich gezeigt, daß sowohl beidseitig als auch auf der Rückseite nicht beschichtete Bauplatten nach der Erfindung dadurch, auch unter den beschriebenen Feuchtigkeitseinflüsse, sicher gehalten werden können und auch in der Lage sind, die temperaturbedingten Eigenbewegungen des Daches ohne Beschädigung der Bauplatten oder der Verbindung mit der Unterkonstruktion bzw. mit der Fassadenfläche aufzunehmen. Die stirnseitige Beschichtung längs der Ränder der Bauplatten fördert deren Verbindung untereinander mittels des gleichen Klebers, also im gleichen Arbeitsgang beim Verlegen der Bauplatten. Die Erfindung erstreckt sich deshalb auch auf die Verwendung von einseitig oder beiseitig beschichteten Bauplatten der genannten Art zur Wärmedämmung und zur Einstrahlungs-Isolierung bei Altbau-Dachabdeckungen und -Fassaden.

RM 384

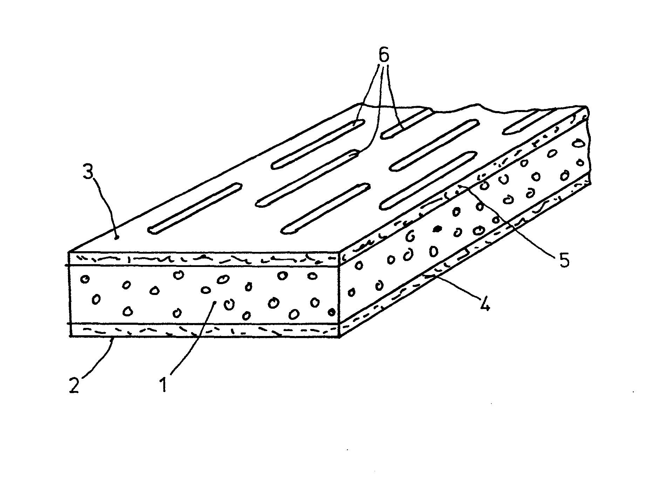

Weitere Merkmale und Vorteile der Erfindung ergeben sich aus nachstehender Beschreibung eines in der Zeichnung schematisch dargestellten Ausführungsbeispieles für die erfindungsgemäße Bauplatte.

Die einzige Figur der Zeichnung zeigt in perspektivischer Unter-Ansicht bei geschnittenen Stirnflächen eine Bauplatte aus einem Kernkörper 1 aus extrudiertem oder partikelgeschäumtem Kunststoff, der eine obere und eine untere Beschichtung 2, 3 aus schwer entflammbar, wetterfest und reflektierend eingestelltem Kunststoff auf Einkomponenten oder Zweikomponenten PUR-Basis aufweist. Zur Realisierung dieser Kunststoff-Beschichtung ist beispielsweise ein unter der Bezeichnung RR 2854/1 II handelsüblicher PUR-Lack verwendbar. Diese Beschichtung auf PUR-Basis ist mechanisch hoch-beanspruchbar, sie reißt auch beim Begehen nicht, da sie sehr flexibel ist. Vorzugsweise erstreckt sich die Beschichtung über alle sechs Außenflächen des quaderförmigen Kernkörpers 1.

Beim dargestellten, bevorzugten Ausführungsbeispiel ist zwischen dem Kernkörper 1 und den filmförmigen Kunststoffbeschichtungen 2, 3, die eine Stärke von mindestens 0,5 mm aufweisen, jeweils noch eine Zwischenschicht 4, 5 zur zusätzlichen Dämmung gegen Wärmeverluste aus Räumen vorgesehen, die auf der Seite der inneren Beschichtung 3 gelegen sind. Bei diesen Zwischenschichten 4, 5 handelt es sich bevorzugt um im Verhältnis zur Stärke des Kernkörpers 1 ebenfalls dünne Glasfaser-Betonschichten oder Schichten aus bitumengebundenen Schieferplättchen oder bitumengebundenem Feinkies.

Die Bauplatte ist in der Zeichnung in Ansicht gegen die untere Beschichtung 3 dargestellt. Auf dieser ist lokal ein Kleber 6 angeordnet, der im dargestellten Beispielsfalle streifenförmig aufgespritzt ist. Mittels dieses

RM 384

Klebers, bei dem es sich bevorzugt um einen Einkomponenten-Kleber auf PUR-Basis handelt, kann die Bauplatte auf einer Dach-Unterkonstruktion, beispielsweise auch auf einer vorhandenen Altbau-Dachabdichtung, aber auch auf Fassadenwänden sicher befestigt werden, ohne daß die Qualität dieser Befestigung durch Feuchtigkeitseinflüsse oder Temperaturschwankungen beeinträchtigt würde.

RM 384

- 8 -

"Bauplatte"

---------------------------------------------------------------

A n s p r ü c h e

1. Bauplatte aus extrudiertem oder partikelgeschäumtem, dünnend beschichtetem Schaumkunststoff, insbesondere zum Schutz gegen die Temperaturbeanspruchung von Dächern, dadurch gekennzeichnet, daß sie eine im Verhältnis zur Stärke des Schaumkunststoff-Kernkörpers (1) dünne, schwer entflammbar, wetterfest und reflektierend eingestellte Kunststoff-Beschichtung (2, 3) aufweist. die auch gegen strahlende Wärme fest ist.

2. Bauplatte nach Anspruch 1, dadurch gekennzeichnet, daß eine Kunststoff-Beschichtung (2, 3) auf PUR-Basis mit Reflexlack vorgesehen ist.

3. Bauplatte nach Anspruch 1 oder 2, dadurch gekennzeichnet, daß die Stärke der äußeren Kunststoff-Beschichtung (2) nach Maßgabe der Flugfeuerfestigkeits-Anforderungen dimensioniert bzw. eingestellt ist.

RM 384

4. Bauplatte nach einem der Ansprüche 1 bis 3, <u>dadurch</u>
<u>gekennzeichnet, daß</u> sie auf sämtlichen Oberflächen einschließlich der Stirnflächen beschichtet ist und daß die
nach außen weisende Beschichtung (2) wellig aufgebracht ist.

5. Bauplatte nach einem der vorangegangenen Ansprüche,
<u>dadurch gekennzeichnet, daß</u> in der Beschichtung (2, 3)
Metall- oder Farbpigmente eingeschlossen sind.

6. Verwendung von Bauplatten nach einem der vorangehenden
Ansprüche zur Wärmedämmung und Einstrahlungs-Isolierung
bei Altbau-Dachabdeckungen oder -Fassaden, wobei die Bauplatten mittels aufgespritzter Kunststoff-Kleber auf
PUR-Basis mit der Dachabdichtung bzw. Fassaden-Außenfläche
und bedarfsweise auch untereinander verbunden werden.

RM 384

0005812

0005812

Nummer der Anmeldung

**Europäisches Patentamt**

# EUROPÄISCHER RECHERCHENBERICHT

EP 79 101 625.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – U – 7143 738 (POLYFUGAL) <br> * Ansprüche 1 bis 5 * <br> --- | 1,2,4 |
| | DE – U – 6 913 793 (F. PREISLER) <br> * Ansprüche 1, 3 * <br> --- | 1,4,6 |
| | DE – A – 2 044 242 (H. SOEFFKY) <br> * Anspruch * <br> --- | 1,4 |
| | DE – A – 1 434 160 (Dr. K. MEYER) <br> * Anspruch 1; Seite 4, letzter Absatz* <br> --- | 1,4 |
| | DE – A – 2 334 220 (H. HÜTZEN KG) <br> * Ansprüche 1, 5 * <br> --- | 1,5 |
| | DE – A – 2 118 318 (MITSUBISHI RAYON) <br> * Ansprüche 1, 2; Seite 11, Absatz 2 <br> bis Seite 14, Absatz 1 * <br> --- | 1,5 |
| | DE – U – 7 209 640 (H. HÜTZEN KG) <br> * Seite 3, Absatz 4 bis Seite 4 <br> Absatz 3 * <br> --- | 1,5 |
| | DE – U – 1 885 035 (HAACKE ALGOSTAT) <br> * Ansprüche 1, 3 * <br> --- | 1,5 |
| | BE – A – 640 458 (E. HAESEBROUCK) <br> * Seite 1, 2 * <br> --- | 1,5 |

**KLASSIFIKATION DER ANMELDUNG (Int.Cl.²)**

E 04 B   1/80
E 04 B   1/94
E 04 C   2/20
E 04 D   3/35
E 04 D  11/00

**RECHERCHIERTE SACHGEBIETE (Int. Cl.²)**

E 04 B   1/00
E 04 C   2/00
E 04 D   3/00
E 04 D  11/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

[X] Der vorliegende Recherchenbericht wurde für alle Patentansprüche erstellt.

| Recherchenort | Abschlußdatum der Recherche | Prüfer |
|---|---|---|
| Berlin | 06-09-1979 | PAETZEL |

EPA form 1503.1  06.78

## Europäisches Patentamt

# EUROPÄISCHER RECHERCHENBERICHT

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE – A – 2 124 811 (BAYER AG) <br> * Anspruch * <br> –– | 1 | |
| | DE – U – 7 729 963 (G. DIGLAS) <br> * Ansprüche 1 bis 3 * <br> –– | 1 | |
| | DE – U – 6 752 304 (K. KLEBER) <br> * Seite 2, letzter Absatz * <br> –– | 5 | |
| | DE – U – 1 996 222 (CHEM. WERKE WORMS-WEINSHEIM) <br> * Seite 3, Absätze 3 bis 5 * <br> –– | 6 | RECHERCHIERTE SACHGEBIETE (Int. Cl.²) |
| A | DE – U – 1 926 868 (W. ILLBRUCK) <br> * Ansprüche 1 bis 5 * <br> –––– | | |

EPA Form 1503.2  06.78